# EUROPÄISCHE PATENTSCHRIFT

(11) **EP 0 894 616 B1**
(45) Veröffentlichungstag und Bekanntmachung des Hinweises auf die Patenterteilung: **21.04.2004**
(21) Anmeldenummer: 98112377.1
(22) Anmeldetag: 04.07.1998
(51) Int. Cl.: B32B 1/08, F16L 9/133

(54) **Rohr aus thermoplastischem Kunststoff**
Pipe made of thermoplastic resin
Tuyau en résine thermoplastique

(30) Priorität: 02.08.1997 DE 29713786 U
(43) Veröffentlichungstag der Anmeldung: 03.02.1999
(73) Patentinhaber: REHAU AG + Co, 95111 Rehau (DE)
(72) Erfinder: Kania, Guido, 95111 Rehau (DE); Seifert, Andreas, 95111 Rehau (DE); Winter, Karlheinz, 95111 Rehau (DE)

(56) Entgegenhaltungen:
- EP-A- 0 326 711
- EP-A- 0 762 032
- EP-A- 0 848 202
- WO-A-91/08101

## Beschreibung

Die Erfindung besteht aus einem Rohr aus thermoplastischem Kunststoff mit wenigstens zwei miteinander verbundenen Rohrschichten, wobei das Außenrohr als tragende Rohrschicht wenigstens an seinem Innenumfang mit einer dünnen Innenschicht belegt ist und wobei das Außenrohr und die Innenschicht aus Thermoplasten unterschiedlicher Eigenschaften koextrudiert sind, wobei die Innenschicht aus einer polymeren Matrix mit fein verteilten, harten Zuschlagsstoffen besteht, wobei die Zuschlagsstoffe in Korngrößen bis zu 200 µm und einer Menge bis zu 50 Gewichtsprozent in der polymeren Matrix dispergiert sind.

Ein Verfahren zur Herstellung eines solchen Rohres ist aus der DE 41 35 336 C2 bekannt. Derartige Rohre werden unter anderem als wasserführende Leitungen, z. B. als Abwasserrohre eingesetzt. Solange diese Abwasserrohre in der Hausinstallation verwendet werden, kann ein beliebiger Schichtenaufbau gewählt werden, wobei die Innenschicht insbesondere gegen aggressive Medien wie Waschlaugen, Chemikalien usw. geschützt sein muß.

Derartige Mehrschichtenrohre können auch als Leitungsrohre für aggressive Medien eingesetzt werden, die durch ungeschützte Rohrwände diffundieren, wie es z. B. bei der Leitung von Kraftstoffen geschieht. In solchen Einsatzfällen muß die Innenschicht oder eine Zwischenschicht zwischen der Innen- und der Außenschicht des Rohraufbaues diffusionsdicht ausgestattet sein.

Werden Mehrschichtenrohre als Abwasserleitungen zum Abtransport von Schmutzwasser oder von mit abrasiven Bestandteilen versehenen Wässern verwendet, muß zumindest die innere Rohrschicht als Verschleißschutzschicht ausgebildet sein. Eine solche Verschleißschutzschicht zeigt das Deutsche Gebrauchsmuster 91 01 322.4. Die Innenschicht des dort beschriebenen zweischichtigen Rohraufbaues besteht aus Polyurethan, einem Werkstoff also, der eine gewisse Standfestigkeit gegen abrasive Medien aufweist. In der Druckschrift wird beschrieben, daß dem Werkstoff Polyurethan energievemichtende Eigenschaften zugeschrieben werden.

Verwendet wird nach der Druckschrift ein tragendes Außenrohr aus festem Kunststoff mit einer Innenschicht, deren Dicke größer ist als die Dicke des Rohrmantels. Die Innenseite der Innenschicht ist glatt und nicht geschäumt, während die dem Rohrmantel zugekehrte Seite der Innenschicht geschäumt sein kann. Um eine ausreichend große Energievemichtung bei großkömigen Medien, insbesondere bei Beton, zu erreichen, ist die Dicke der Innenschicht größer gehalten als die Dicke der Rohrwand.

Rohre mit einem derartigen Wandaufbau mögen zwar eine gewisse Verschleißfestigkeit gegen abrasive Medien aufweisen, die Herstellung solcher Mehrschichtenrohre ist jedoch sehr aufwendig. Dies liegt darin begründet, daß zur Verbindung des äußeren Rohrmantels aus festem Kunststoff mit der Innenschicht aus Polyurethan je nach Art des festen Kunststoffs teure Klebstoffe verwendet werden müssen, wobei ggf. vor der Verklebung der innere Umfang des Außenrohres noch mit einer Corona-Behandlung, einer Primerung usw. versehen werden muß.

Aus der DE 30 02 231 A1 ist weiterhin ein korrosionsbeständiges Kunststoffrohr bekannt, welches ein Außenrohr aus mit Glasfasern verstärkten Duroplasten und einer im Verhältnis zum Außenrohr dünnere Innenschicht aus einem Duroplasten mit mineralischen Zuschlagsstoffen aufweist. Die mineralischen Zuschlagsstoffe liegen dabei in einer Korngröße bis zu ca. 3 mm vor und die Schichtstärke des duroplastischen Innenrohres beträgt ca. 2-5 mm. Die mineralischen Zuschlagsstoffe sind in die duroplastische Matrix eingebettet und bilden zusammen mit der duroplastischen Matrix die gewünschte Korrosionsschutzschicht.

Der zweischichtige Rohraufbau kann als Leitungsrohr für Frischwasser oder Abwasser unterhalb oder oberhalb der Erdoberfläche eingesetzt werden. Dieses Leitungsrohr kann weiter mit einer Beton- oder Stahlbeton-Ummantelung versehen sein.

Die Verarbeitung von Duroplasten für die Herstellung von Rohren ist vom Material her kostenaufwendig und arbeitsintensiv.

Aus der EP-A-0 326 711 genannt, ist ein gattungsgemäßes Rohr aus thermoplastischem Kunststoff offenbart, bestehend aus zwei miteinander verbundenen Rohrschichten, wobei das Außenrohr an seinem Innenumfang mit einer dünnen Rohrschicht belegt ist und die Innenschicht aus einer polymeren Matrix mit einer definierten Menge reibungsmindernder Additive (Zuschlagsstoffe) versetzt ist, wobei diese gleitfähigen Additive in einer Menge bis zu 40 Gewichtsprozent in der polymeren Matrix dispergiert sind. Als reibungsmindernde Additive können (siehe Spalte 2, Zeile 24-27) der innen, dünneren Polymerschicht Zusätze wie Molybdändisulfid, Graphit, Polytetrafluorethylen, Silikon und dergleichen zugesetzt werden.
Die Funktion der reibungsmindernden Additive kann derart beschrieben werden (Spalte 3, Zeile 36-42), dass diese beim Reibvorgang aus der die Grenzfläche bestimmenden Oberflächenschicht der inneren, dünneren Polymerschicht abgenommen werden und an dem einzuziehenden Kabel, Rohr und dergleichen eine Gleitschicht aufbauen.

Aus der EP-A-0 762 032 ist ein mehrschichtiges Rohr aus thermoplastischem Kunststoff offenbart, wobei das zweischichtige Außenrohr an seinem Innenumfang mit einer dünnen Innenschicht belegt ist. Das mehrschichtige Außenrohr weist in seiner polymeren Matrix harte Zuschlagsstoffe auf, wobei diese Zuschlagsstoffe in einer Menge bis zu 95 Gewichtsprozent in der polymeren Matrix des mehrschichtigen Außenrohres dispergiert sind. Diese Zuschlagsstoffe sind ausgewählt aus der Gruppe bestehend aus Aramidfasern, Glasfasern, Kohlefasern, Talk, Calciumcarbonat und Bariumsulfat. Die Fasern sollen (Seite 2 Zeile 28-30) einen Durchmesser von 6-15 µm, insbesondere 10-13 µm und eine Länge von etwa 2-7 mm, insbesondere 3-6 mm, aufweisen.

Die WO-A-9 108 101 offenbart ein Rohr aus thermoplastischem Kunststoff, bestehend aus zwei miteinander verbundenen Rohrschichten, wobei das Außenrohr an seinem Innenumfang mit einer dünnen Innenschicht belegt ist und die Innenschicht aus einer polymeren Matrix mit fein verteilten, harten Zuschlagsstoffen besteht, wobei die Zuschlagsstoffe in einer Menge von bis zu 95 Gewichtsprozent in der polymeren Matrix dispergiert sind.

Die Innenschicht der WO-A-9 108 101 ist dadurch zu einem Rohr geformt, dass ein Flachmaterial beziehungsweise eine dünne Bahn aus Kunststoff, den Zuschlagsstoff enthaltend, geformt ist und die Randabschnitte des geformten Flachmaterials beziehungsweise der geformten Bahn unter Bildung einer Schweißverbindung miteinander verschweißt sind. Das Außenrohr gemäß der WO-A-9 108 101 ist durch Wickeln einer faserverstärkten Kunststoffschicht gebildet, wobei die Faserverstärkung vorzugsweise in Linksrichtung des Kunststoffbandes verläuft und dieses Kunststoffband im Wesentlichen tangential gewickelt ist.

Gegenüber dem genannten Stand der Technik hat sich die Erfindung die Aufgabe gestellt, ein wenigstens zweischichtiges Leitungsrohr anzugeben, welches eine abriebfeste Innenschicht aufweist und damit zum Einsatz als Leitung für abrasive Bestandteile aufweisende fließfähige Medien geeignet ist. Erfindungsgemäß wird dazu vorgeschlagen, dass die mit den harten Zuschlagsstoffen gefüllte Innenschicht zusätzlich vernetzt ist.

Mit dem erfindungsgemäßen Aufbau der Innenschicht wird die Abriebfestigkeit des mehrschichtigen Rohres extrem erhöht. Da die polymere Matrix der Innenschicht aus Polyethylen, vorzugsweise High Density Polyethylen (PE-HD) besteht, ist diese Schicht schon vom verwendeten Basiswerkstoff her bereits hervorragend korrosionsbeständig, so daß ein gesonderter Korrosionsschutz - wie beim Stand der Technik - bei dem Rohraufbau nach der Erfindung nicht mehr erforderlich ist.

Die fein verteilten, harten Zuschlagsstoffe der inneren Verschleißschutzschicht sind harte, abriebfeste Partikel wie Silicate, Glaskugeln, gebrannte Tone, Quarze, Talkum oder Glimmer. Diese Partikel sind in die Basismatrix aus thermoplastischen Polymeren eingebettet.

Die Verschleißschutzschicht der Erfindung, die mit den harten Zuschlagsstoffen gefüllt ist, kann vorteilhaft zusätzlich vemetzt sein. Diese Maßnahme stärkt die Widerstandskraft der Verschleißschutzschicht gegen Abrieb und Spannungsrißkorrosion noch weiter. Die Vernetzung kann eine Silanvernetzung sein, die nach der Herstellung des Rohrverbundes erst durch Einwirkung von äußerer Feuchtigkeit anspringt und ausvemetzt.

In einer vorteilhaften Ausführung kann der inneren Verschleißschutzschicht zusätzlich zu den harten Zuschlagsstoffen Metallpulver in Korngrößen bis zu 200 µm beigegeben sein. Dabei kann das Metallpulver auch Anteile der obengenannten harten Zuschlagsstoffe ersetzen.

Dieses Metallpulver wird zusammen mit den harten Zuschlagsstoffen in die thermoplastische, polymere Matrix eingemischt. Das Metallpulver kann dabei in einer Menge bis zu 50 Gewichtsprozent der polymeren Matrix beigegeben werden.

Da das Außenrohr aus einem polymeren Material bestehen kann, welches im Wege der Koextrusion ohne zusätzliche Verklebung mit der Innenschicht einstückig verbunden wird, ist der Herstellungsaufwand für das erfindungsgemäße Mehrschichtenrohr relativ gering. Auch die Einbringung der Zuschlagsstoffe ist verfahrenstechnisch wenig aufwendig, da diese bei der Aufschmelzung der polymeren Matrix für die Innenschicht während dieses Aufschmelzprozesses beigemischt werden. Durch die Einmischung der harten Zuschlagsstoffe erfolgt eine makromolekulare Gefügeänderung in der Polymer-Matrix, die das Endprodukt vor mit hoher kinetischer Energie vorbeischießenden Partikeln schützt. So erfolgt beim Auftreffen solcher Partikel ein elastischer Rückprall anstatt plastischer Verformung der Innenschicht. Dies wird erreicht mit einer Verschleißschutzschicht einer Dicke von 0,2 bis 1 mm, welche mit harten Zuschlagsstoffen der Partikelgröße von max. 200 µm beladen ist.

Die zusätzlich zu den harten Zuschlagsstoffen in die polymere Matrix der Innenschicht eingemischten Metallpulver unterstützen einerseits die Abriebfestigkeit der Innenschicht durch die eingelagerten, harten Metallpartikel, andererseits sorgen diese dafür, daß in das Rohrlumen eingebrachtes Fremdlicht optisch gestreut wird. Dieses Fremdlicht kann im Zuge von Kanal-Kamerabefahrungen eingebracht werden und die optische Streuung ermöglicht eine verbesserte Ausleuchtung der Rohrinnenfläche und damit eine einfache Detektion von Innenwandbeschädigungen und dergleichen Schadstellen.

## Patentansprüche

1. Rohr aus thermoplastischem Kunststoff, bestehend aus wenigstens zwei miteinander verbundenen Rohrschichten, wobei das Außenrohr als tragende Rohrschicht wenigstens an seinem Innenumfang mit einer dünnen Innenschicht belegt ist und wobei das Außenrohr und die Innenschicht aus Thermoplasten unterschiedlicher Eigenschaften koextrudiert sind, wobei die Innenschicht aus einer polymeren Matrix mit fein verteilten, harten Zuschlagsstoffen besteht, wobei die Zuschlagsstoffe in Korngrößen bis zu 200 µm und einer Menge bis zu 50 Gewichtsprozent in der polymeren Matrix dispergiert sind,
**dadurch gekennzeichnet,**
**dass** die mit den harten Zuschlagsstoffen gefüllte Innenschicht zusätzlich vernetzt ist.

2. Rohr nach Anspruch 1, **dadurch gekennzeichnet, dass** die Vernetzung eine Silanvernetzung ist.

3. Rohr nach Anspruch 1 bis 2, **dadurch gekennzeichnet, dass** die harten Zuschlagsstoffe Silikate, Glaskugeln, gebrannte Tone, Quarze und Talkum oder Glimmer sind.

4. Rohr nach Anspruch 1 bis 2, **dadurch gekennzeichnet, dass** zusätzlich zu den harten Zuschlagsstoffen oder anstatt dieser Metallpulver in Korngrößen bis zu 200 µm in die polymere Matrix eingemischt sind.

5. Rohr nach Anspruch 4, **dadurch gekennzeichnet, dass** die Metallpulver in einer Menge bis zu 50 Gewichtsprozent der polymeren Matrix beigemischt sind.

## Claims

1. Pipe made of a thermoplastic material, consisting of at least two mutually connected pipe layers, wherein the outer pipe, acting as a supporting pipe layer, is covered at least on its inner circumference with a thin inner layer, and wherein the outer pipe and the inner layer are co-extruded from thermoplastic materials with different properties, the inner layer consisting of a polymer matrix with finely distributed hard additives, and the additives being dispersed in the polymer matrix in particle sizes of up to 200 µm and in a quantity of up to 50 weight percent,
**characterised in that**
the inner layer filled with the hard additives is also crosslinked.

2. Pipe according to claim 1, **characterised in that** the crosslinking is silane crosslinking.

3. Pipe according to claims 1 and 2, **characterised in that** the hard additives are silicates, glass spheres, burnt clays, quartzes and talc or mica.

4. Pipe according to claims 1 and 2, **characterised in that**, in addition to or instead of the hard additives, metal powders in particle sizes of up to 200 µm are mixed into the polymer matrix.

5. Pipe according to claim 4, **characterised in that** the metal powders are admixed into the polymer matrix in a quantity of up to 50 weight percent.

## Revendications

1. Tube en matière thermoplastique, constitué au minimum de deux couches combinées entre elles, le tube extérieur qui forme la couche support étant recouvert d'une mince couche intérieure au moins sur sa circonférence interne, le tube extérieur et la couche intérieure étant co-extrudés à partir de thermoplastiques possédant des caractéristiques différentes, la couche intérieure étant composée d'une matrice de polymères comportant des agrégats rigides finement répartis, les agrégats dispersés dans la matrice de polymères présentant une granulométrie allant jusqu'à 200 µm et une quantité allant jusqu'à 50 pour cent en poids,
**caractérisé en ce que**,
la couche intérieure chargée avec les agrégats rigides est en outre réticulée.

2. Tube selon revendication 1, **caractérisé en ce que** la réticulation est une réticulation au silane.

3. Tube selon revendication 1 à 2, **caractérisé en ce que** les agrégats rigides sont des silicates, boules de verre, de l'argile cuite, des quartz et du talc ou du mica.

4. Tube selon revendication 1 à 2, **caractérisé en ce que** l'on intègre au mélange de la matrice de polymères, en sus ou en remplacement des agrégats rigides, de la poudre de métal d'une granulométrie allant jusqu'à 200 µm.

5. Tube selon revendication 4, **caractérisé en ce que** les poudres de métal sont intégrées au mélange de la matrice de polymères selon une quantité allant jusqu'à 50 pour cent en poids.
